# EUROPÄISCHE PATENTSCHRIFT

(11) **EP 3 821 687 B1**
(45) Veröffentlichungstag und Bekanntmachung des Hinweises auf die Patenterteilung: **05.10.2022**
(21) Anmeldenummer: 20192829.8
(22) Anmeldetag: 26.08.2020
(51) Int. Cl.: A01B 59/042, B60D 1/46

(54) **KUPPLUNGSVORRICHTUNG**
COUPLING DEVICE
DISPOSITIF DE COUPLAGE

(30) Priorität: 13.11.2019 DE 102019130636
(43) Veröffentlichungstag der Anmeldung: 19.05.2021
(73) Patentinhaber: HANS SAUERMANN GMBH & CO. KG, 86558 Freinhausen (DE)
(72) Erfinder: SAUERMANN, Franz, 86558 Freinhausen (DE)
(74) Vertreter: TBK

(56) Entgegenhaltungen:
- EP-A1- 1 428 696
- EP-A1- 1 609 344
- EP-A1- 2 977 237
- DE-A1- 4 427 399

## Beschreibung

Die Erfindung betrifft eine Kupplungsvorrichtung für Zugmaschinen zum Anhängen von Anhängern und insbesondere landwirtschaftlichen Geräten.

Es sind unterschiedlichste Kupplungsvorrichtungen bekannt. Im Grunde ist allen gemein, dass sie einen Haken aufweisen, um Anhänger und landwirtschaftliche Geräte und dergleichen anhängen zu können. Üblicherweise ist eine Verriegelungsvorrichtung vorgesehen, um ein unbeabsichtigtes Abhängen zu vermeiden.

Insbesondere für schwerere Gerätschaften hat sich eine sogenannte Pick-Up Hitch bewährt. Bei der bekannten Pick-Up Hitch der Firma John Deere ist der Haken mit einer ausfahrbaren Kassette verbunden, um das Anhängen zu erleichtern. Diese Kassette ist in einem unteren Bauteil gelagert, das von einem oberen Bauteil aufgenommen wird, wobei beide Bauteile mit der Zugmaschine verbunden werden. Am Oberteil ist eine Verriegelungsvorrichtung vorgesehen, mittels der die genannte Verriegelung ermöglicht wird. Es handelt sich bei dieser Kupplungsvorrichtung um eine reine Schweißkonstruktion, das heißt, alle Komponenten werden aus diversen Elementen zusammengeschweißt und gegebenenfalls bearbeitet. Das Dokument EP 1 609 344 A1 offenbart eine Kupplungsvorrichtung gemäß dem Oberbegriff des Anspruchs 1.

Aufgabe der Erfindung ist es, eine gattungsgemäße Kupplungsvorrichtung zu schaffen, die bei hoher Betriebssicherheit und Bedienungsfreundlichkeit robust zuverlässig ist.

Die Aufgabe wird durch die Merkmale des Anspruchs 1 gelöst. Als Kern der Erfindung im Sinne des Anspruchs 1 ist anzusehen, dass die verschiebliche Kassette als reine Gusskonstruktion ausgebildet ist, wobei zwei beabstandete biegesteife Profile, die mittels eines Verbindungsteils verbunden sind, eine sehr steife Konstruktion ermöglichen, was ein Verklemmen der Kassette auch nach einer langen Nutzungszeit und Anhängen schwerer Last ausschließt.

Durch die Merkmale der Unteransprüche werden insbesondere die Betriebssicherheit und Bedienungsfreundlichkeit weiter gesteigert. Vorteilhaft sind die Profile als U- oder Doppel-T-Profile ausgebildet. Die Anordnung der Profile erfolgt dabei so, dass bei U- oder Doppel-T-Profilen die offene Seite im montierten Zustand nach außen weist, die Schenkel des Doppel-T- bzw. U-Profils befinden sich also auf der Ober- und Unterseite der Kassette. Auf diese Weise steht eine große Führungsfläche bei Aufnahme der Kassette im Unterteil zur Verfügung, was genauer anhand des konkreten Ausführungsbeispiels erläutert wird.

Im Betrieb treten die größten Lasten an den unteren Führungsflächen der Kassette, aber auch an den oberen Flächen auf. Die Seitenflächen dienen dagegen in erster Linie zur Führung der Kassette in dem sie aufnehmenden Unterteil. Zweckmäßig werden die Führungsflächen des Gussteils bearbeitet, um eine hohe Oberflächengüte und Maßhaltigkeit zu erreichen. Vorteilhafterweise werden dabei alle Führungsflächen bearbeitet. Das Gussteil kann auf relativ einfache Weise hergestellt werden und die angestrebte Qualität der Oberflächen sowie deren Maßhaltigkeit durch einen einfachen Bearbeitungsgang in einer Werkzeugmaschine erzielt werden. Hierdurch lassen sich im Vergleich zu einer reinen Schweißkonstruktion deutlich bessere Maßhaltigkeiten und Oberflächengüten erzielen. Weiterhin muss kein Schweißverzug befürchtet werden.

Vorteilhafterweise wird auch das Unterteil, das die Kassette aufnimmt, als Gusskonstruktion ausgeführt. Bewährt hat sich eine nach oben offene Konstruktion, die leicht zu gießen ist und mittels eines Deckels, der beispielsweise mittels einer Verschraubung mit dem Unterteil verbindbar ist, leicht verschlossen werden kann. Dabei kann die Oberseite des unverschlossenen Unterteils mit einer Werkzeugmaschine überarbeitet werden und ein einfacher Stahldeckel aufgeschraubt werden. Auch hier kann durch einen einfachen Bearbeitungsvorgang eine hohe Maßhaltigkeit erzielt werden. Um die Beweglichkeit der Kassette im Unterteil zu verbessern, können Gleitschienen eingesetzt werden. Zweckmäßig werden derartige Gleitschienen am Boden des Unterteils vorgesehen. Diese Gleitschienen werden dort vorgesehen, wo das Unterteil mit den unteren Führungsflächen der Kassette zusammenwirkt. Ebenso können am Deckel des Unterteils Gleitschienen innen vorgesehen sein, um mit den oberen Führungsflächen der Kassette zusammenzuwirken. Zur Arretierung bzw. Befestigung der Gleitschienen können im Gussteilbereich Vorkehrungen getroffen werden. So können im Gussteil Vorsprünge und dergleichen vorgesehen sein, um die Lage der Gleitschienen zu definieren. Die Gleitschienen können auch durch übliche Befestigungsmittel, wie zum Beispiel Schrauben, mit dem Unterteil bzw. dessen Deckel verbunden sein. Grundsätzlich können derartige Gleitschienen natürlich auch in den Seitenwänden des Unterteils vorgesehen sein, um mit den seitlichen Führungsflächen der Kassette zusammenzuwirken.

Bewährt hat sich das Vorsehen der Gleitschienen im Unterteil, es können jedoch auch die entsprechenden Flächen des Unterteils bearbeitet werden und Gleitschienen an den korrespondierenden Flächen der Kassette vorgesehen werden.

Das Unterteil der Kupplungsvorrichtung wird zweckmäßig von einem Oberteil aufgenommen. Dabei hat sich eine zweiteilige Gestaltung des Oberteils bewährt, da es ausreichend ist, im vorderen und hinteren Bereich der Kupplungsvorrichtung ein Oberteil vorzusehen, wodurch Material und Kosten gespart werden. Zum Transport und zur Montageerleichterung der Kupplungsvorrichtung können die beiden Teile des Oberteils mittels jeweils einer Strebe verbindbar und fixierbar sein. Üblicherweise wird das Oberteil mit dem Getriebe der Zugmaschine verschraubt.

Zur Verschraubung der verschiedenen Teile miteinander oder mit der Zugmaschine können in den Gussteilen bereits Löcher vorgesehen sein, die mittels einer Werkzeugmaschine nachbearbeitet werden. Die Löcher können jedoch auch erst nachträglich mittels einer Werkzeugmaschine eingebracht werden. Ebenso verhält es sich mit Lagerbohrungen für weitere Komponenten, beispielsweise den Hydraulikzylinder für die Verschiebung der Kassette.

Um die Bedienbarkeit der Kupplungsvorrichtung weiter zu verbessern, kann der Verriegelungsmechanismus fernbedienbar gestaltet sein. Die Fernbedienbarkeit kann über einen Bowdenzug oder ein Hydrauliksystem erzielt werden. Weiterhin kann ein Kontrollstift zur Anzeige des Verriegelungsstatus vorgesehen sein, der es auf einfache Weise ermöglicht, zu überprüfen ob die Kupplungsvorrichtung ordnungsgemäß verriegelt ist. Vorteilhaft wird der die Verriegelung bewirkende Verriegelungsbolzen mittels einer Feder in die geschlossene verriegelte Stellung vorbelastet. Zur Bewegung des Verriegelungsbolzens in die offene, entriegelte Stellung kann ein schwenkbarer Sperrhebel vorgesehen sein, der mit dem Verriegelungsbolzen zusammenwirkt. Hierzu kann am Verriegelungsbolzen ein Sperrstift angeordnet sein, der mit Vor- oder Rücksprüngen des Sperrhebels zusammenwirkt. Auf diese Weise kann eine Schwenkbewegung des Sperrhebels in eine translatorische Bewegung des Verriegelungsbolzens umgewandelt werden, um diesen aus der verriegelten Stellung gegen die Druckkraft der genannten Feder in die offene Stellung zu bringen.

Um den Verriegelungsbolzen in der offenen Stellung zu halten, kann der Sperrhebel festgesetzt werden, was beispielsweise durch die genannte Fernbedienung, beispielsweise einem Bowdenzug, erfolgen kann, es kann aber auch ein Rastmechanismus vorgesehen sein, der ein Verrasten von Sperrhebel und Verriegelungsbolzen in der offenen Stellung bewirkt. Um dies zu erreichen, kann beispielsweise am Sperrhebel ein Vorsprung vorgesehen sein, der eine Kuhle in Form einer Ausbuchtung aufweist, die ein Element des Verriegelungsbolzens, beispielsweise den genannten Querstift, aufnimmt. Auf diese Weise verrasten Sperrhebel und Verriegelungsbolzen in der Offenstellung. Um den Verriegelungsbolzen aus der Offenstellung in die geschlossene, verriegelte Stellung zu bewegen, können unterschiedliche Konstruktionen vorgesehen sein. So kann der Sperrhebel mittels der Fernbedienung oder direkt vor Ort aus der Raststellung verschwenkt werden und damit den Verriegelungsbolzen freigeben, der dann von der Feder in die verriegelte Stellung bewegt wird.

Der Bedienungskomfort kann jedoch durch ein automatisches Verriegeln erhöht werden. Zu diesem Zweck kann das Ende des Verriegelungsbolzens, das die eigentliche Verriegelung am Haken vornimmt, mit zumindest einer abgeschrägten Fläche an der Oberseite versehen sein und die offene Stellung so bemessen sein, dass beim Eindringen des mit dem Haken zusammenwirkenden Elements des Anhängers oder der anzuhängenden Maschine der Verriegelungsbolzen weiter gegen die Druckkraft der Feder bewegt wird und somit aus der Raststellung herausbewegt wird. Der Sperrhebel wird dabei verschwenkt und die Bewegung des Verriegelungsbolzens durch die Druckkraft der Feder in die verriegelte Stellung freigegeben. Ein derartiger Mechanismus wird im Detail anhand des Ausführungsbeispiels beschrieben.

Um die Sicherheit gegen unbeabsichtigtes Entriegeln weiter zu erhöhen, kann auch der Kontrollstift, der dem Benutzer die ordnungsgemäße Verriegelung anzeigen soll, mit einem Sperrmechanismus ausgestattet sein. So kann der Kontrollstift eine Fläche aufweisen, die, wenn sich der Verriegelungsbolzen in der verriegelten Stellung befindet, mit einer korrespondierenden Fläche des Bolzens in Anlage kommt und auf diese Weise ein Verschieben des Verriegelungsbolzens aus der verriegelten in die offene Stellung unmöglich macht. Um die Kupplung zu öffnen, das heißt, den Verriegelungsbolzen in die offene Stellung zu überführen, muss dann der Kontrollstift erst aus der Sperrstellung herausbewegt werden, um die Bewegung des Verriegelungsbolzens zu ermöglichen. Dies kann durch eine einfache Handhabe geschehen oder eben auch über den Sperrhebel. In diesem Fall wirkt der Sperrhebel so mit dem Kontrollstift zusammen, dass bei Verschwenken des Sperrhebels zunächst der Kontrollstift aus der Sperrstellung in eine offene Position gebracht wird, in der die Verschiebung des Verriegelungsbolzens nicht behindert, und anschließend der Sperrhebel mit dem Verriegelungsbolzen in Eingriff kommt und diesen wie beschrieben in die offene Stellung überführt.

Die Erfindung wird näher anhand eines konkreten Ausführungsbeispiels erläutert. Es zeigen:
Fig. 1 die Kupplungsvorrichtung komplett im montagefertigen Zustand,
Fig. 2 die verschiebbare Kassette zur Aufnahme des Hakens,
Fig. 3 das Unterteil zur Aufnahme der Kassette,
Fig. 4 das Oberteil zur Aufnahme des Unterteils,
Fig. 5 den Verriegelungsmechanismus in der verriegelten Stellung,
Fig. 6 den Verriegelungsmechanismus in der verriegelten Stellung mit dem in Eingriff befindlichen Kontrollstift,
Fig. 7 den Verriegelungsmechanismus in der komplett geöffneten Stellung,
Fig. 8 den Verriegelungsmechanismus in der offenen Raststellung, und
Fig. 9 den Verriegelungsmechanismus beim Schließen.

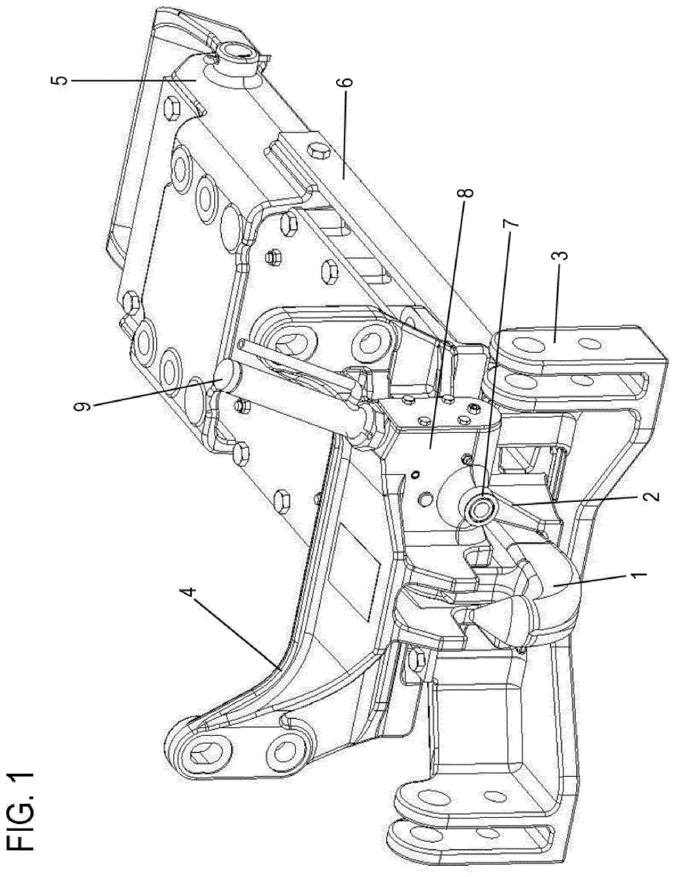

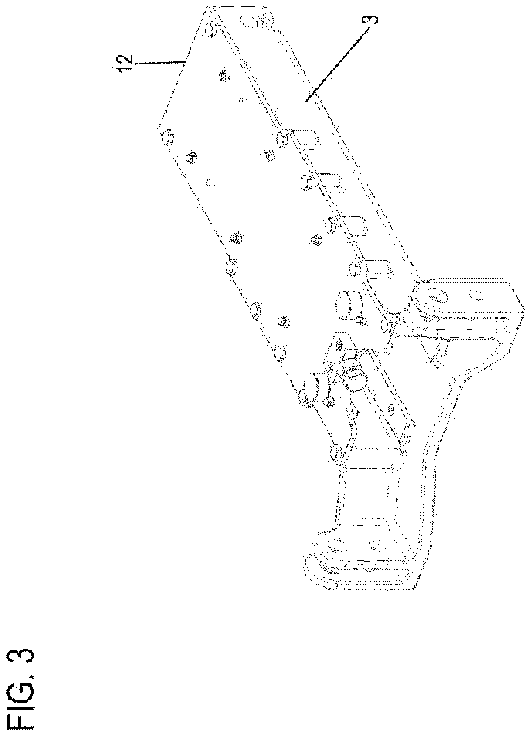

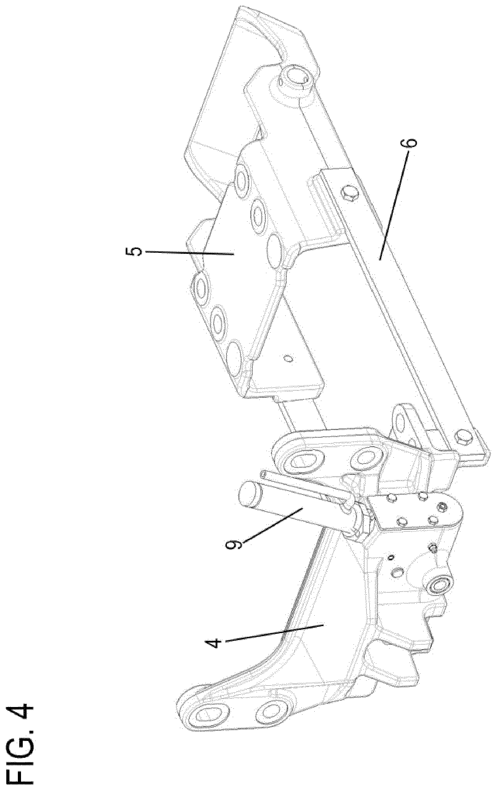

Fig. 1 zeigt die Kupplungsvorrichtung im montagefertigen Zustand. Gut zu erkennen ist der Haken 1 zur Aufnahme von Anhängern oder anderen Gerätschaften. Der Haken 1 wird von einer verschiebbaren Kassette 2 getragen, die im Unterteil 3 gelagert ist. Das Unterteil 3, das im Detail in Fig. 3 gezeigt wird, ist wiederrum im vorderen Oberteil 4 und hinteren Oberteil 5 aufgenommen. Die beiden Oberteile 4 und 5 werden durch jeweils eine Strebe 6 auf jeder Seite zusammengehalten. Die Streben 6 erleichtern den Transport der vormontierten Kupplungsvorrichtung und die Montage derselben an der Zugmaschine. Die Oberteile 4 und 5 werden, wie noch besser in Fig. 4 zu sehen, mit der Zugmaschine beim konkreten Ausführungsbeispiel mit dem Getriebe der Zugmaschine verschraubt. Nach Montage der Oberteile 4 und 5 können die Streben 6 demontiert werden.

Weiterhin zu sehen ist der Sicherungskontrollstift 7, der die verriegelte Stellung anzeigt, was noch genauer erläutert werden wird. Die Verriegelungsvorrichtung 8 verfügt über eine Fernbedienung, die über einen Bowdenzug 9 erfolgt. In einer nicht dargestellten Variante wird ein elektrisch gesteuerter Zylinder verwendet, wobei auch eine hydraulische Betätigung möglich ist.

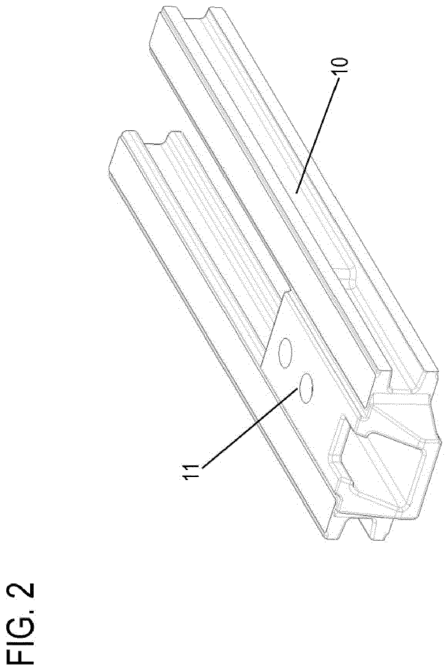

Wie bereits in der Einleitung ausgeführt, sind bei dem konkreten Ausführungsbeispiel alle Bauteile als Gusselemente ausgeführt. Insbesondere die Ausführung der den Haken tragenden verschieblichen Kassette 2 als Gussbauteil hat sich als ausgesprochen vorteilhaft erwiesen, da bei relativ kostengünstiger Fertigung eine extrem hohe Maßgenauigkeit und Biegesteifigkeit erreicht werden kann. Die Kassette 2 ist in Fig. 2 dargestellt. Wie aus der Figur zu ersehen, werden zwei Doppel-T-Profile gegossen, die durch ein mittiges Element verbunden sind, wobei es sich wie ausgeführt um eine einstückige Gusskonstruktion handelt. Der Haken 1 wird vom genannten Mittelelement 11 aufgenommen. Die beiden Doppel-T-Profile 10 können auf einfache, kostengünstige Weise von einer Werkzeugmaschine überarbeitet werden, sodass sich eine sehr hohe Maßhaltigkeit und hohe Oberflächengüte der Führungsflächen ergibt.

Beim konkreten Ausführungsbeispiel sind Führungsflächen auf der Ober- und Unterseite sowie den beiden Seiten der Kassette 2 vorgesehen. Es werden also jeweils die Ober- und Unterseite des Doppel-T-Profils überarbeitet und als Führungsflächen ausgebildet. Weiterhin die schmaleren, zu den Seiten weisenden Schenkel des Doppel-T-Profils, die zur seitlichen Führung der Kassette 2 im Unterteil 3 dienen. Beim konkreten Ausführungsbeispiel werden also alle nach außen weisenden Flächen der Doppel-T-Profile 10 zu Führungsflächen überarbeitet, da diese mit entsprechenden Flächen des Unterteils 3 in Anlage kommen.

Das Unterteil 3 ist in Fig. 3 dargestellt. Das Unterteil 3 ist als nach oben offenes Gussteil ausgebildet und wird auf der Oberseite durch einen Deckel 12 aus Stahl, der beispielsweise mittels Laser aus einer Platte ausgeschnitten werden kann, verschraubt und somit geschlossen. Das geschlossene Unterteil 3 nimmt die verschiebliche Kassette 2 auf. Am Boden des Unterteils 3 sind in den Bereichen, die mit den Führungsflächen der Doppel-T-Profile in Eingriff kommen, Führungsschienen aus Teflon vorgesehen. Diese Führungsschienen oder Elemente sind in Fig. 3 nicht dargestellt. Diese Elemente weisen dieselbe Breite auf, wie die Führungsflächen der Doppel-T-Profile 10 und sind am Boden des Unterteils 3 befestigt. Eine sichere Positionierung der Führungsschienen kann durch Vorsprünge 13 am Boden des Unterteils 3 weiter verbessert werden. Ebenso wird durch diese Vorsprünge 13 die Montage der Führungsschienen oder Führungsflächen erleichtert. Beim konkreten Ausführungsbeispiel sind derartige Führungsschienen lediglich am Boden des Unterteils vorgesehen. Dies hat sich als grundsätzlich ausreichend herausgestellt.

Natürlich ist es möglich, entsprechende Führungsschienen oder Führungsflächen auch auf der Unterseite des Deckels 12 im Bereich der Führungsflächen des Doppel-T-Profils 10, sowie an den Seitenwänden des Unterteils 3 dort vorzusehen, wo die seitlichen Führungsflächen der Doppel-T-Profile 10 mit dem Unterteil 3 in Kontakt kommen.

Das Unterteil 3 wird wiederrum vom Oberteil 4, 5 aufgenommen, das bei der konkreten Ausführungsform zweiteilig gestaltet ist, um Gewicht und Produktionskosten zu senken. Das vordere Oberteil 4 und das hintere Oberteil 5 sind wie ausgeführt für den Transport und die Montage mit Streben 6 verbunden, die verschraubt werden. Das Oberteil 4, 5 selbst wird bei dieser Ausführungsform am Getriebe der Zugmaschine verschraubt. Hierzu sind Bohrungen 14 vorgesehen. Nach Verschraubung des Oberteils 4, 5 bzw. der Kupplungsvorrichtung mit dem Getriebe der Zugmaschine können die Streben 6 entfernt werden.

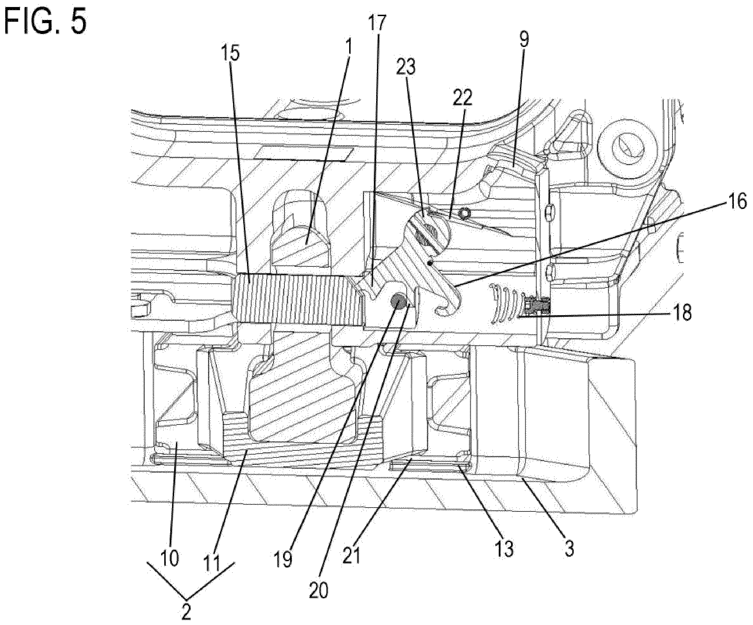

Aus Fig. 5 sind Details der Verriegelungseinrichtung zu sehen. Die Vorrichtung ist im Querschnitt dargestellt. Zu sehen ist die Kassette 2, die verschieblich im Unterteil 3 gelagert ist. In dieser Darstellung sind auch die Gleitschienen 21 zu sehen. Weiterhin im Querschnitt der hintere Teil des Hakens 1, der mit dem Mittelteil 11 der Kassette 2 verbunden ist. Ein Verriegelungsbolzen 15 wird von einer angedeuteten Druckfeder 18 in die dargestellte gesperrte Stellung verschoben. Ein verschwenkbarer Sperrhebel 16 dient zum einen der Bewegung des Verriegelungsbolzens 15, zum anderen der Sicherung des Verriegelungsbolzens 15 in der verriegelten Stellung. Zur Sicherung weist der Sperrhebel 16 einen Arm 17 mit einer Sperrfläche am Ende auf. In der dargestellten Stellung wirkt diese Sperrfläche mit einer korrespondierenden abgeschrägten Fläche des Verriegelungsbolzens 15 zusammen, sodass ohne ein Verschwenken des Sperrhebels 16 der Verriegelungsbolzen 15 nicht aus der verriegelten Stellung verschoben werden kann. Weiterhin ist am Verriegelungsbolzen ein Querstift 19 vorgesehen, der ebenfalls mit einem Hebel 20 des Sperrhebels so in Anlage ist, dass der Verriegelungsbolzen 15 ohne Verschwenken des Sperrhebels 16 nicht aus der verriegelten Stellung verschoben werden kann. Ein Verschwenken des Sperrhebels 16 in der Zeichenebene nach rechts, wird durch eine Schenkelfeder 22, die in der gezeigten Stellung mit einem Vorsprung 23 am Sperrhebel 16 zusammenwirkt, unmöglich gemacht.

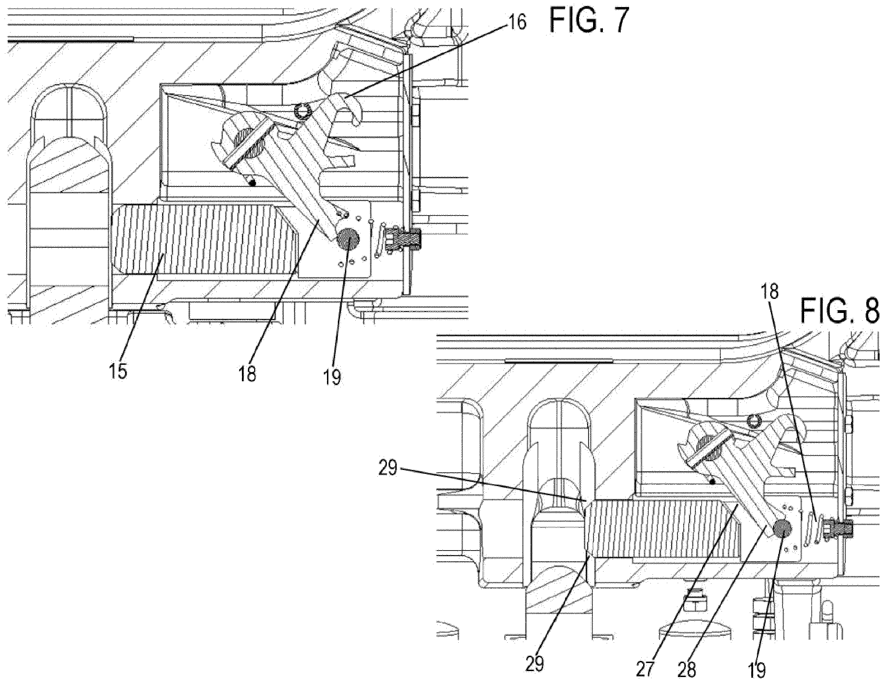

Zur Freigabe des Verriegelungsbolzens 15 und Öffnen der Kupplung, wird der Sperrhebel 16 mittels der Fernbedienung in der Zeichenebene nach links, also gegen den Uhrzeigersinn gedreht. Hierdurch wird zum einen der Querstift 19 freigegeben und zum anderen die Sperrfläche des Arms 17 von der korrespondierenden Fläche des Verriegelungsbolzens 15 getrennt, sodass der Verriegelungsbolzen 15 frei ist. Bei weiterer Drehbewegung des Sperrhebels 16 im Gegenuhrzeigersinn kommt eine Fläche des Arms 17 des Sperrhebels 16 in Eingriff mit dem Querstift 19 und bewegt auf diese Weise den Verriegelungsbolzen 15 gegen die Kraft der Druckfeder 18 in der Zeichenebene nach rechts. Die komplett geöffnete Stellung ist in Fig. 7 dargestellt, und die Raststellung in Fig. 8 worauf später eingegangen wird.

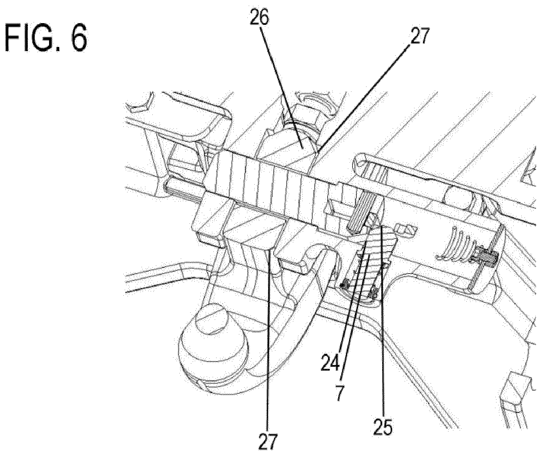

Bei der konkreten Ausführungsform ist weiterhin der bereits in Fig. 1 dargestellte Kontrollstift 7 vorgesehen, mittels dem leicht erkannt werden kann, ob sich die Kupplungsvorrichtung in der verriegelten Stellung befindet oder nicht. Befindet sich der Verriegelungsbolzen 15 in der verriegelten Stellung, wird der Kontrollstift 7 mittels einer Feder in die in Fig. 6 gezeigte Stellung bewegt. Das heißt, der Kontrollstift 7 rückt in den Bewegungsraum des Verriegelungsbolzens 15 vor und ist somit komplett eingerückt, wie in Fig. 1 dargestellt. Diese Position des Kontrollstifts 7 signalisiert eine korrekte Verriegelung. Der Kontrollstift 7 weist in seinem vorderen in den Bewegungsraum des Verriegelungsbolzens 15 eintretenden Abschnitt eine Seitenfläche 24 auf, die in der verriegelten Stellung mit einer entsprechenden Fläche des Verriegelungsbolzens 15 in Eingriff ist, wobei auf diese Weise ebenfalls der Verriegelungsbolzen 15 an einem Verschieben aus der Verriegelungsstellung gehindert wird. Wird der Sperrhebel 16 wie beschrieben im Gegenuhrzeigersinn verschwenkt, drückt dieser den Kontrollstift 7 so weit nach außen, also aus dem Bewegungsraum des Verriegelungsbolzens 15 heraus, dass eine schräge Fläche 25 des Kontrollstifts 7 mit einer korrespondierenden Schrägfläche des Verriegelungsbolzens 15 in Eingriff kommt und der Verriegelungsbolzen 15 durch seine Translationsbewegung in der Zeichenebene nach rechts in die geöffnete Stellung den Kontrollstift 7 ganz nach außen drückt.

Die maximale Öffnungsstellung ist in Fig. 7 dargestellt. Der Sperrhebel 16 ist so weit im Gegenuhrzeigersinn gedreht, dass er mit einem Arm an einem Anschlag anliegt. Der Verriegelungsbolzen 15 befindet sich in der maximal geöffneten Position, also in der Zeichenebene am weitesten nach rechts geschobenen Position. Der Haken 1 kann mit der Kassette 2 nunmehr frei bewegt werden.

Der Haken 1 weist in dem Bereich, in dem er mit dem Verriegelungsbolzen 15 zusammenwirkt, einen nach oben weisenden Abschnitt 26 auf, der durchbrochen ist, um den Verriegelungsbolzen 15 in der Verriegelungsposition aufzunehmen und auf diese Weise den Haken 1 zu blockieren. Dieser Abschnitt 26 weist an seinem vorderen und hinteren Ende eine abgeschrägte Fläche 27 auf. Befindet sich der Haken 1 aufgrund eines Ausschiebens der Kassette 2 in der ausgeschobenen Position, kommt der Abschnitt 26 in keiner Weise mit dem Verriegelungsbolzen 15 in Berührung. Der Verriegelungsbolzen 15 wird dann in die Raststellung gebracht, die in Fig. 8 dargestellt ist. In dieser Stellung verrastet der Querstift 19 des Verriegelungsbolzen 15 in einer Mulde 28 am äußeren Ende des Arms 17. In dieser Raststellung ist der Verriegelungsbolzen 15 gegenüber der in Fig. 7 dargestellten ganz geöffneten Stellung leicht nach links, also in Richtung verriegelte Stellung verschoben. Das freie, in der Zeichenebene linke Ende des Verriegelungsbolzens 15 weist abgeschrägte Flächen 29 auf, die in der Raststellung in den Bewegungsbereich des Abschnitts 26 des Hakens 1 ragen. Wird nun der Haken 1 mittels der Kassette 2 in die Kupplungsvorrichtung eingefahren, kommt die schräge Fläche 27 des Abschnitts 26 mit der schrägen Fläche 29 des Verriegelungsbolzens in Eingriff und verschiebt den Verriegelungsbolzen 15 aus der Raststellung in die voll geöffnete Stellung, die in Fig. 7 dargestellt ist. Der inzwischen freigegebene Sperrhebel 16 erlaubt dann die Bewegung des Verriegelungsbolzens 15 in die in Fig. 5 dargestellte verriegelte Stellung.

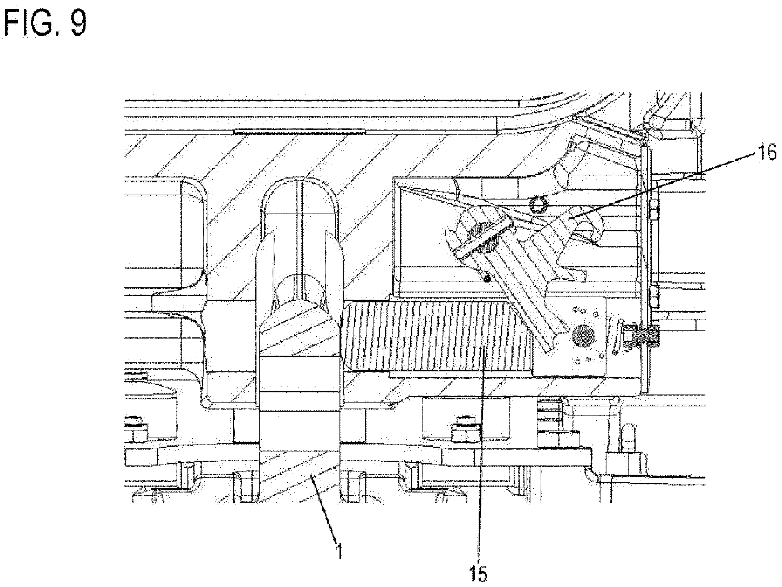

Fig. 9 zeigt den Verriegelungsmechanismus beim Schließen. Der Sperrhebel 16 wurde aus der Raststellung freigegeben und drückt durch die Federkraft der Schenkelfeder auf den Verriegelungsbolzen 15. Sobald der Haken 1 vollständig eingefahren ist, schließt und verriegelt der Bolzen automatisch.

## Patentansprüche

1. Kupplungsvorrichtung für Zugmaschinen zum Anhängen von Anhängern und insbesondere landwirtschaftlichen Geräten, die einen Haken (1) aufweist, der mit einer verschieblichen Kassette (2) zum Aus- und Einfahren des Hakens (1) verbunden ist, wobei die Kassette (2) in einem Unterteil (3) gelagert ist und der Haken (1) mit der Kassette (2) im eingefahrenen Zustand mittels eines Verriegelungsmechanismus verriegelbar ist, **dadurch gekennzeichnet, dass**
die Kassette (2) zwei beabstandete biegesteife Profile (10) aufweist, die mittels eines Verbindungsteils (11) verbunden sind, das den Haken (1) aufnimmt, wobei die Profile (10) und das Verbindungsteil (11) einstückig als Gussteil ausgebildet sind.

2. Kupplungsvorrichtung nach Anspruch 1, **dadurch gekennzeichnet, dass** die Profile (10) U- oder Doppel-T-Profile sind.

3. Kupplungsvorrichtung nach Anspruch 1 oder 2, **dadurch gekennzeichnet, dass** die Profile (10) zumindest an einer Längsfläche bearbeitet sind.

4. Kupplungsvorrichtung nach einem der Ansprüche 1 bis 3, **dadurch gekennzeichnet, dass** die Profile (10) an den beiden gegenüberliegenden Flächen, die im eingebauten Zustand die Ober- und Unterfläche bilden, bearbeitet sind.

5. Kupplungsvorrichtung nach einem der Ansprüche 1 bis 4, **dadurch gekennzeichnet, dass** die Profile (10) an den Außenflächen, die im eingebauten Zustand die Außenflächen der Kassette (2) bilden, bearbeitet sind.

6. Kupplungsvorrichtung nach einem der Ansprüche 1 bis 5, **dadurch gekennzeichnet, dass** die Kassette (2) von einem als Gussteil ausgeführten Unterteil (3) aufgenommen wird.

7. Kupplungsvorrichtung nach Anspruch 6, **dadurch gekennzeichnet, dass** das Unterteil (3) nach oben hin offen ist und mittels eines anbringbaren Deckels (12) verschließbar ist.

8. Kupplungsvorrichtung nach Anspruch 7, **dadurch gekennzeichnet, dass** der Deckel (12) mittels einer Verschraubung mit dem Unterteil (3) verbindbar ist.

9. Kupplungsvorrichtung nach einem der Ansprüche 1 bis 8, **dadurch gekennzeichnet, dass** zumindest in Teilbereichen des Bodens des Unterteils Gleitschienen (21) vorgesehen sind.

10. Kupplungsvorrichtung nach Anspruch 9, **dadurch gekennzeichnet, dass** Gleitschienen (21) dort vorgesehen sind, wo die Profile (10) der Kassette (2) im eingeschobenen Zustand der Kassette (2) am Unterteil (3) aufliegen.

11. Kupplungsvorrichtung nach Anspruch 9 oder 10, **dadurch gekennzeichnet, dass** zur Arretierung der Gleitschienen (21) Vorsprünge (13) im Unterteil (3) vorgesehen sind und/oder Befestigungsmittel, bevorzugt Verschraubungen.

12. Kupplungsvorrichtung nach einem der Ansprüche 1 bis 11, **dadurch gekennzeichnet, dass** das Oberteil (4, 5) zur Aufnahme des Unterteils (3) mit Kassette (2) zweiteilig als Gussteil ausgebildet ist, wobei die beiden Gussteile in Längsrichtung der Kassette (2) beabstandet sind und jedes mit einem Teil der Zugmaschine, bevorzugt dem Getriebe, verbindbar, bevorzugt verschraubbar, ist.

13. Kupplungsvorrichtung nach Anspruch 12, **dadurch gekennzeichnet, dass** die beiden Teile (4, 5) des Oberteils (4, 5) zum Transport der Vorrichtung und zur Montageerleichterung mittels zwei Streben (6) verbindbar und fixierbar sind.

14. Kupplungsvorrichtung nach einem der Ansprüche 1 bis 13, **dadurch gekennzeichnet, dass** der Verriegelungsmechanismus fernbedienbar ist und einen Kontrollstift (7) zur Anzeige des Verriegelungsstatus aufweist.

15. Kupplungsvorrichtung nach Anspruch 14, **dadurch gekennzeichnet, dass** ein Verriegelungsbolzen (15) mittels einer Feder (8) in die geschlossene, verriegelte Stellung vorbelastet ist.

16. Kupplungsvorrichtung nach Anspruch 14 oder 15, **dadurch gekennzeichnet, dass** die Bewegung des Verriegelungsbolzens (15) in die offene entriegelte Stellung mittels eines schwenkbaren Sperrhebels (16) erfolgt.

17. Kupplungsvorrichtung nach Anspruch 15 oder 16, **dadurch gekennzeichnet, dass** der Verriegelungsbolzen (15) einen Querstift (19) aufweist, der mit einem Arm (17) des Sperrhebels (16) zum Verschieben des Verriegelungsbolzens (15) zusammenwirkt.

18. Kupplungsvorrichtung nach Anspruch 16 oder 17, **dadurch gekennzeichnet, dass** der Sperrhebel (16) eine Rastmulde (28) aufweist, die mit dem Querstift (19) verrastbar ist, um den Verriegelungsbolzen (15) in einer offenen Entriegelungsposition zu halten.

19. Kupplungsvorrichtung nach Anspruch 18, **dadurch gekennzeichnet, dass** der Sperrhebel (16) mittels eines Bowdenzugs oder einer Hydraulik oder einer elektrischen Betätigung aus der Raststellung bewegbar ist, um den Verriegelungsbolzen (15) freizugeben.

20. Kupplungsvorrichtung nach einem der Ansprüche 16-19, **dadurch gekennzeichnet, dass** der Sperrhebel (16) mittels eines Verschiebens des Verriegelungsbolzens (15) bewegbar ist, um den Verriegelungsbolzen (15) komplett freizugeben.

21. Kupplungsvorrichtung nach einem der Ansprüche 14 bis 20, **dadurch gekennzeichnet, dass** der Kontrollstift (7) eine Sperrfläche (24) aufweist, mit der er den Verriegelungsbolzen (15) in der geschlossenen Verriegelungsstellung blockiert.

22. Kupplungsvorrichtung nach Anspruch 21, **dadurch gekennzeichnet, dass** der Kontrollstift (7) bei Verschwenken des Sperrhebels (16) so verschoben wird, dass die Sperrfläche (24) den Verriegelungsbolzen (15) freigibt.

## Claims

1. Coupling device for tractors for hooking up trailers and in particular agricultural implements, the coupling device having a hook (1) which is connected to a displaceable cassette (2) for extending and retracting the hook (1), wherein the cassette (2) is mounted in a lower part (3), and the hook (1) is lockable to the cassette (2) in the retracted state by means of a locking mechanism, **characterized in that** the cassette (2) has two spaced-apart, flexurally rigid profiles (10) which are connected by means of a connecting part (11) which receives the hook (1), the profiles (10) and the connecting part (11) being formed integrally as a cast part.

2. Coupling device according to Claim 1, **characterized in that** the profiles (10) are U profiles or double T profiles.

3. Coupling device according to Claim 1 or 2, **characterized in that** the profiles (10) are machined at least on one longitudinal surface.

4. Coupling device according to one of Claims 1 to 3, **characterized in that** the profiles (10) are machined on the two opposite surfaces that, in the fitted state, form the upper surface and lower surface.

5. Coupling device according to one of Claims 1 to 4, **characterized in that** the profiles (10) are machined on the outer surfaces that, in the fitted state, form the outer surfaces of the cassette (2).

6. Coupling device according to one of Claims 1 to 5, **characterized in that** the cassette (2) is accommodated by a lower part (3) which is in the form of a cast part.

7. Coupling device according to Claim 6, **characterized in that** the lower part (3) is open upwards and is closable by means of an attachable cover (12).

8. Coupling device according to Claim 7, **characterized in that** the cover (12) is connectable to the lower part (3) by means of a screw connection.

9. Coupling device according to one of Claims 1 to 8, **characterized in that** sliding rails (21) are provided at least in partial regions of the base of the lower part.

10. Coupling device according to Claim 9, **characterized in that** the sliding rails (21) are provided wherever the profiles (10) of the cassette (2) rest on the lower part (3) in the inserted state of the cassette (2).

11. Coupling device according to Claim 9 or 10, **characterized in that** projections (13) are provided in the lower part (3), and/or fastening means, preferably screw connections, for locking the sliding rails (21).

12. Coupling device according to one of Claims 1 to 11, **characterized in that** the upper part (4, 5) is formed in two parts as a cast part in order to receive the lower part (3) with the cassette (2), the two cast parts being spaced apart in the longitudinal direction of the cassette (2) and each being connectable, preferably screwable, to part of the tractor, preferably to the gearbox.

13. Coupling device according to Claim 12, **characterized in that**, for the transport of the device and to facilitate installation, the two parts (4, 5) of the upper part (4, 5) are connectable and fixable by means of two struts (6) .

14. Coupling device according to one of Claims 1 to 13, **characterized in that** the locking mechanism is remotely controllable and has a control pin (7) for indicating the locking status.

15. Coupling device according to Claim 14, **characterized in that** a locking bolt (15) is preloaded into the closed, locked position by means of a spring (8).

16. Coupling device according to Claim 14 or 15, **characterized in that** the locking bolt (15) is moved into the open, released position by means of a pivotable catch lever (16).

17. Coupling device according to Claim 15 or 16, **characterized in that** the locking bolt (15) has a transverse pin (19) which interacts with an arm (17) of the catch lever (16) in order to displace the locking bolt (15).

18. Coupling device according to Claim 16 or 17, **characterized in that** the catch lever (16) has a latching depression (28) which is latchable to the transverse pin (19) in order to hold the locking bolt (15) in an open release position.

19. Coupling device according to Claim 18, **characterized in that** the catch lever (16) is movable out of the latching position by means of a Bowden cable or hydraulics or electrical actuation, in order to release the locking bolt (15).

20. Coupling device according to one of Claims 16-19, **characterized in that** the catch lever (16) is movable by means of displacement of the locking bolt (15), in order to completely release the locking bolt (15).

21. Coupling device according to one of Claims 14 to 20, **characterized in that** the control pin (7) has a locking surface (24) with which it blocks the locking bolt (15) in the closed locking position.

22. Coupling device according to Claim 21, **characterized in that**, during pivoting of the catch lever (16), the control pin (7) is displaced in such a manner that the blocking surface (24) releases the locking bolt (15).

## Revendications

1. Dispositif de couplage pour tracteurs servant à l'attelage de remorques et en particulier d'outils agricoles, qui présente un crochet (1) qui est relié à une cassette coulissante (2) pour la rentrée et la sortie du crochet (1), la cassette (2) étant montée dans une pièce inférieure (3) et le crochet (1) pouvant être verrouillé avec la cassette (2) dans l'état rentré au moyen d'un mécanisme de verrouillage, **caractérisé en ce que**
la cassette (2) présente deux profilés (10) espacés résistant à la flexion, lesquels sont reliés au moyen d'une pièce de liaison (11) qui reçoit le crochet (1), les profilés (10) et la pièce de liaison (11) étant réalisés d'un seul tenant sous forme de pièce coulée.

2. Dispositif de couplage selon la revendication 1, **caractérisé en ce que** les profilés (10) sont des profilés en U ou des profilés en double T.

3. Dispositif de couplage selon la revendication 1 ou 2, **caractérisé en ce que** les profilés (10) sont usinés au moins sur une surface longitudinale.

4. Dispositif de couplage selon l'une des revendications 1 à 3, **caractérisé en ce que** les profilés (10) sont usinés sur les deux surfaces opposées qui, dans l'état installé, forment la surface supérieure et la surface inférieure.

5. Dispositif de couplage selon l'une des revendications 1 à 4, **caractérisé en ce que** les profilés (10) sont usinés sur les surfaces extérieures qui, dans l'état installé, forment les surfaces extérieures de la cassette (2).

6. Dispositif de couplage selon l'une des revendications 1 à 5, **caractérisé en ce que** la cassette (2) est reçue par une pièce inférieure (3) configurée sous forme de pièce coulée.

7. Dispositif de couplage selon la revendication 6, **caractérisé en ce que** la pièce inférieure (3) est ouverte vers le haut et peut être fermée au moyen d'un couvercle (12) pouvant être attaché.

8. Dispositif de couplage selon la revendication 7, **caractérisé en ce que** le couvercle (12) peut être relié à la pièce inférieure (3) au moyen d'un vissage.

9. Dispositif de couplage selon l'une des revendications 1 à 8, **caractérisé en ce que** des glissières (21) sont prévues au moins dans des régions partielles de la base de la pièce inférieure.

10. Dispositif de couplage selon la revendication 9, **caractérisé en ce que** des glissières (21) sont prévues là où les profilés (10) de la cassette (2) reposent sur la pièce inférieure (3) dans l'état inséré de la cassette (2) .

11. Dispositif de couplage selon la revendication 9 ou 10, **caractérisé en ce que**, pour l'arrêt des glissières (21), des saillies (13) et/ou des moyens de fixation, de préférence des vissages, sont prévus dans la pièce inférieure (3).

12. Dispositif de couplage selon l'une des revendications 1 à 11, **caractérisé en ce que** la pièce supérieure (4, 5) est, pour la réception de la pièce inférieure (3) dotée de la cassette (2), réalisée en deux pièces sous forme de pièce coulée, les deux pièces coulées étant espacées dans la direction longitudinale de la cassette (2) et chacune pouvant être reliée à, de préférence pouvant être vissée sur, une partie du tracteur, de préférence la transmission.

13. Dispositif de couplage selon la revendication 12, **caractérisé en ce que** les deux pièces (4, 5) de la pièce supérieure (4, 5) peuvent être reliées et peuvent être fixées au moyen de deux barres (6) pour le transport du dispositif et pour faciliter le montage.

14. Dispositif de couplage selon l'une des revendications 1 à 13, **caractérisé en ce que** le mécanisme de verrouillage peut être commandé à distance et présente une goupille de contrôle (7) pour l'affichage de l'état de verrouillage.

15. Dispositif de couplage selon la revendication 14, **caractérisé en ce qu'**un axe de verrouillage (15) est précontraint dans la position verrouillée fermée au moyen d'un ressort (8).

16. Dispositif de couplage selon la revendication 14 ou 15, **caractérisé en ce que** le déplacement de l'axe de verrouillage (15) dans la position déverrouillée ouverte s'effectue au moyen d'un levier de blocage (16) pivotant.

17. Dispositif de couplage selon la revendication 15 ou 16, **caractérisé en ce que** l'axe de verrouillage (15) présente une goupille transversale (19) qui coopère avec un bras (17) du levier de blocage (16) pour le coulissement de l'axe de verrouillage (15).

18. Dispositif de couplage selon la revendication 16 ou 17, **caractérisé en ce que** le levier de blocage (16) présente une cavité d'encliquetage (28) qui peut être encliquetée avec la goupille transversale (19), afin de maintenir l'axe de verrouillage (15) dans une position de déverrouillage ouverte.

19. Dispositif de couplage selon la revendication 18, **caractérisé en ce que** le levier de blocage (16) peut être déplacé hors de la position d'encliquetage au moyen d'un câble Bowden ou d'un système hydraulique ou d'un actionnement électrique, afin de libérer l'axe de verrouillage (15).

20. Dispositif de couplage selon l'une des revendications 16 à 19, **caractérisé en ce que** le levier de blocage (16) peut être déplacé grâce à un coulissement de l'axe de verrouillage (15), afin de libérer complètement l'axe de verrouillage (15).

21. Dispositif de couplage selon l'une des revendications 14 à 20, **caractérisé en ce que** la goupille de contrôle (7) présente une surface de blocage (24) par laquelle elle bloque l'axe de verrouillage (15) dans la position de verrouillage fermée.

22. Dispositif de couplage selon la revendication 21, **caractérisé en ce que** la goupille de contrôle (7) est, lors du pivotement du levier de blocage (16), coulissée de telle sorte que la surface de blocage (24) libère l'axe de verrouillage (15).
